# EUROPÄISCHE PATENTSCHRIFT

(11) **EP 1 518 627 B1**
(45) Veröffentlichungstag und Bekanntmachung des Hinweises auf die Patenterteilung: **14.11.2007**
(21) Anmeldenummer: 04022851.2
(22) Anmeldetag: 24.09.2004
(51) Int. Cl.: B23B 51/02, B23B 51/06

(54) **Bohrwerkzeug und Spannhülse**
Drill and clamping sleeve
Foret et douille de serrage

(30) Priorität: 25.09.2003 DE 10344620
(43) Veröffentlichungstag der Anmeldung: 30.03.2005
(73) Patentinhaber: Manfred Schwegler Werkzeugfabrik, 89269 Vöhringen (DE)
(72) Erfinder: Schwegler, Bernd, 89269 Vöhringen (DE)
(74) Vertreter: Körfer, Thomas

(56) Entgegenhaltungen:
- EP-A- 0 238 477
- DE-A- 3 830 590
- GB-A- 434 383

## Beschreibung

Die Erfindung betrifft ein Bohrwerkzeug.

Konventionelle Bohrwerkzeuge, insbesondere Spiralbohrwerkzeuge, weisen neben einem die Haupt- und Querschneide enthaltenden Bohrerkopf und einem Werkzeugschaft, der in spiralförmigen Spannuten jeweils eine Nebenschneide beinhaltet, einen Spannschaft auf. Über diesen Spannschaft ist das Bohrwerkzeug in einer Spannvorrichtung, beispielsweise einem Spannfutter, einer Werkzeugmaschine zentriert und kraft- und/oder formschlüssig fixiert.

Hartmetall-Bohrwerkzeuge mit einer Härte, die heute fast die Härte eines Diamanten erreichen kann, werden in einem Strangpreßverfahren, das in der DE 36 00 681 A1 beschrieben ist, aus einer gesinterten Metalllegierung gewonnen. Ein Bohrwerkzeug, das aus Hartmetall hergestellt ist, ist der EP 0 283 698 A2 zu entnehmen. Die Anbringung des Bohrerkopfes wie auch des als Spannschaft dienenden Stützkörpers an den durch das Strangpreßverfahren hergestellten Werkzeugschaft des Bohrwerkzeugs ist in der EP 0 118 035 A1 vorgestellt.

Nachteilig am Bohrwerkzeug der EP 0 283 698 A2 ist die Notwendigkeit eines als Spannschaft dienenden Stützkörpers, da dies mit einem zusätzlichen Fertigungs- und Materialaufwand verbunden ist. Außerdem ist nur an einem der beiden Enden ein Bohrkopf vorhanden, so daß das Bohrwerkzeug auch wegen der fehlenden zweiten Nebenschneide nicht an beiden Enden eingespannt werden kann, zumal auch der Stützkörper nur an einem Ende montierbar ist.

In der GB 434 383 A ist ein Bohrer für einen Bohrhammer offenbart, welcher einen Schaft mit einheitlichem Querschnitt und mit einem Bohrerkopf an seinen jeweiligen Enden aufweist. Der Spiralbohrer weist eine Fase an der vorderen Kante der Spirale auf. Die Fase erstreckt sich über die gesamte Länge der Spirale und dient ausschließlich dazu, das Loch zu säubern, welches durch die Schneidkanten der Bohrerschneide hergestellt wird.

Die EP-A-0 238 477 offenbart einen Bohrerkörper, der einen mit Außenwendelnuten versehenen Schaft aufweist. Dabei sind Stege auf dem Schaft ausgebildet, die einen ihren Verläufen entsprechenden Verlauf aufweisenden Kanal erhalten, durch den ein größerer Durchsatz an Spülmittel erfolgt und somit ein verbesserter Spanabtransport.

Die DE 38 30 590 A beschreibt ein Verfahren zur Herstellung von Bohrern, wobei Probleme, die beim Sintern einer Spiralform aus Superhartmetallpulvern aufgrund des Erhitzens und Abkühlens auftreten, behandelt werden. Darüber hinaus wird das Bilden spiralförmiger Kühlkanäle, welche beim Extrudieren des Superhartmetallpulvers in eine Spiralform gebildet werden, beschrieben.

Der Erfindung liegt daher die Aufgabe zugrunde, ein Bohrwerkzeug gemäß dem Oberbegriff von Anspruch 1, derart weiterzubilden, dass die Materialausnutzung des Bohrwerkzeugs optimiert ist.

Die Aufgabe der Erfindung wird durch ein Bohrwerkzeug mit den Merkmalen des Anspruchs 1 gelöst.

Durch Vorsehen eines zweiten Bohrerkopfes an dem zweiten Ende des Werkzeugschafts kann die Standzeit des erfindungsgemäßen Bohrwerkzeug bei verschleißbedingter Abnutzung des ersten Bohrerkopfes durch Benutzung des zweiten Bohrerkopfs erhöht werden. Außerdem ist der Materialverbrauch aufgrund der Erstreckung des mit Spannuten versehenen Werkzeugschafts über die gesamte Länge des Werkzeugs von dem einen Bohrerkopf bis zu dem zweiten Bohrerkopf gegenüber einem konventionellen Bohrwerkzeug mit Spannschaft stark vermindert.

Vorteilhafte Ausgestaltungen der Erfindung sind in den jeweils abhängigen Ansprüchen angegeben.

Die exakte Zentrierung des erfindungsgemäßen Bohrwerkzeugs in der Spannhülse der Spannvorrichtung ohne Ausbildung eines Spannschafts im erfindungsgemäßen Bohrwerkzeug wird dadurch gelöst, dass der Werkzeugeschaft des erfindungsgemäßen Bohrwerkzeugs für jeden Steg jeweils eine zweite Führungsfase aufweist, die den gleichen Außendurchmesser wie die erste Führungsfase besitzt. Ein derart ausgeführter Werkzeugsschaft des erfindungsgemäßen Bohrwerkzeugs kann in dem hohlzylindrischen Teilkörper der Spannhülse, dessen Innendurchmesser den Außendurchmessern der beiden Führungsfasen des Werkzeugschaftes entspricht, einzig in axiale Richtung geführt werden. Eine translatorische Verschiebe- oder rotatorische Kippmöglichkeit des Werkzeugschafts in radialer Richtung innerhalb des hohlzylindrischen Teilkörpers der Spannhülse und damit eine exzentrische Lagerung des Bohrwerkzeug in der Spannvorrichtung mit Spiel ist somit ausgeschlossen.

Zusätzlich sei angemerkt, daß der verwendete Werkstoff des Bohrwerkzeugs eine gesinterte Hartmetallegierung aus Wolframcarbit und Cobalt (Mischungsverhältnis Wolframcarbit : Cobalt z. B. 9 : 1) sein kann, die eine Härte aufweist, die fast der Härte eines Diamanten entspricht. Von daher können von der Spannvorrichtung über die Spannhülse auf den Werkzeugschaft des Bohrwerkzeugs, der im Gegensatz zu einem vollzylindrischen Spannschaft spiralförmige oder anders geformte Ausnehmungen aufweist, radial gerichtete Spannkräfte in der gleichen Größenordnung wie bei einem vollzylindrischen Spannschaft aufgebracht werden, ohne daß eine Zerstörung des Werkzeugschaftes aufgrund zu hoher Spannkräfte zu erwarten ist.

Das erfindungsgemäße Bohrwerkzeug ohne Ausbildung eines Spannschafts kann sowohl in der Variante der achsparallelen Ausrichtung der Spannuten und der dazwischenliegenden Stege wie auch in der Variante der spiralförmig angeordneten Spannuten und der dazwischenliegenden Stege wie im Falle eine Spiralbohrers ausgeführt sein.

Im Hinblick auf eine exaktere Führung und damit zusammenhängend eine exaktere Zentrierung des Bohrwerkzeugs in der Spannhülse der Spannvorrichtung können auf den Stegen des Werkzeugschaftes des erfindungsgemäßen Bohrwerkzeuges jeweils mehr als zwei Führungsfasen mit jeweils gleichem Außendurchmesser angebracht sein.

Im Hinblick auf eine gute tangentiale Fixierung des erfindungsgemäßen Bohrwerkzeugs in der Spannhülse der Spannvorrichtung ist der hohlzylindrische Teilkörper der Spannhülse an seiner Grundfläche mit einer runden Abschlußplatte verbunden, in deren Mittelpunkt eine Durchgangsbohrung angebracht ist, deren Profil dem Querschnittsprofil des Werkzeugschaftes des Bohrwerkzeugs entspricht. Auf diese Weise wird der Werkzeugschaft gegenüber dem Kühlmittel abgedichtet.

Das an das Querschnittprofil des Werkzeugsschafts angepaßte Profil der Durchgangsbohrung ermöglicht eine beliebige axiale Verschiebung des Bohrwerkzeugs relativ zur Spannhülse der Spannvorrichtung, womit eine beliebig einstellbare Auskraglänge des Bohrwerkzeugs und damit axiale Fixierung des Bohrwerkzeugs zur Spannvorrichtung realisiert werden kann.

Als weitere vorteilhafte Ausgestaltung der Erfindung kann die Anbringung einer zweiten Nebenschneide gegenüber der ersten Nebenschneide in jeder Spannut gelten

Bevorzugte Ausführungsformen der Erfindung sind in der Zeichnung dargestellt und werden nachfolgend näher beschrieben. Es zeigen:
- Fig. 1A, 1B: eine Seitenansicht und eine Draufsicht einer ersten Ausführungsform eines beispielhaften Bohrwerkzeugs,
- Fig. 2A, 2B: eine Seitenansicht und eine Draufsicht einer zweiten Ausführungsform eines beispielhaften Bohrwerkzeugs,
- Fig. 3A, 3B: eine Seitenansicht und eine Draufsicht einer dritten Ausführungsform eines beispielhaften Bohrwerkzeugs
- Fig. 4A, 4B: eine Seitenansicht und eine Draufsicht eines Ausführungsbeispiels des erfindungsgemäßen Bohrwerkzeugs und
- Fig. 5A, 5B, 5C: ein Querschnitt und zwei Draufsichten einer Spannhülse.

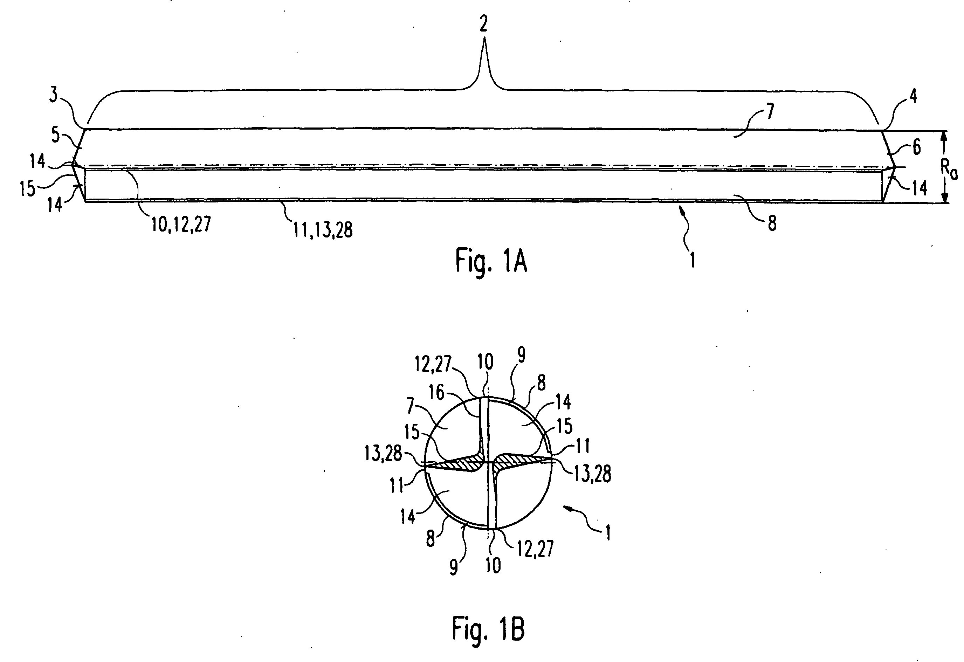

Das erfindungsgemäße Bohrwerkzeug wird in seiner ersten Ausführungsform 1 nachfolgend unter Bezugnahme auf Fig. 1A und 1B beschrieben.

In Fig. 1A ist die Seitenansicht und in Fig. 1B ist die Draufsicht einer ersten Ausführungsform des beispielhaften Bohrwerkzeugs 1 dargestellt. Die erste Ausführungsform des beispielhaften Bohrwerkzeugs 1 besteht aus einem zylinderförmigen Werkzeugschaft 2 durchgängig zwischen einem ersten Ende 3 und einem zweiten Ende 4 des Bohrwerkzeugs 1, und einem ersten Bohrerkopf 5 am ersten Ende 3 und einem zweiten Bohrerkopf 6 am zweiten Ende 4.

In den Werkzeugsschaft 2 sind mindestens zwei achsparallele Spannuten 7 eingebracht. Zwischen jeweils zwei achsparallelen Spannuten 7 weist der Werkzeugeschaft 2 jeweils einen Steg 8 auf. Jeder der Stege 8 besitzt eine teilzylinderförmige Nebenfreifläche 9. Auf jeder Nebenfreifläche 9 verläuft an den Übergangszonen zu den beiden angrenzenden Spannuten 7 vom ersten Ende 3 bis zum zweiten Ende 4 in achsparalleler Richtung jeweils eine erste Führungsfase 10 und zweite Führungsfase 11 konstanter Breite, deren Außendurchmesser jeweils gleich groß ist. Der erste Übergang 27 zwischen jeder Spannut 7 und einem der beiden angrenzenden Stege 8 ist im Bereich der ersten Führungsfase 10 scharfkantig über die volle axiale Länge des Werkzeugeschaftes 2 jeweils als erste Nebenschneide 12 ausgeführt. Der zweite Übergang 28 zwischen jeder Spannut 7 und dem jeweils anderen der beiden angrenzenden Stege 8 ist im Bereich der zweiten Führungsfase 11 ebenfalls scharfkantig über die volle Länge des Werkzeugsschaft jeweils als zweite Nebenschneide 13 ausgeführt.

Der erste Bohrerkopf 5 und der gleich ausgebildete zweite Bohrerkopf 6 sind konisch ausgeführt. Die Nebenfreiflächen 9 der Stege 8 gehen hierbei in die konisch verlaufenden Hauptfreiflächen 14 des ersten Bohrerkopfes 5 und des zweiten Bohrerkopf 6 über. Der Übergang zwischen jeder Hauptfreifläche 14 und einer der angrenzenden und auslaufenden Spannuten 7 ist scharfkantig als erste Hauptschneide 15 ausgeführt. Der Übergang zwischen jeder Hauptfreifläche 14 und der jeweils anderen der beiden angrenzenden und auslaufenden Spannuten 7 ist ebenfalls scharfkantig als zweiten Hauptschneide 16 ausgeführt.

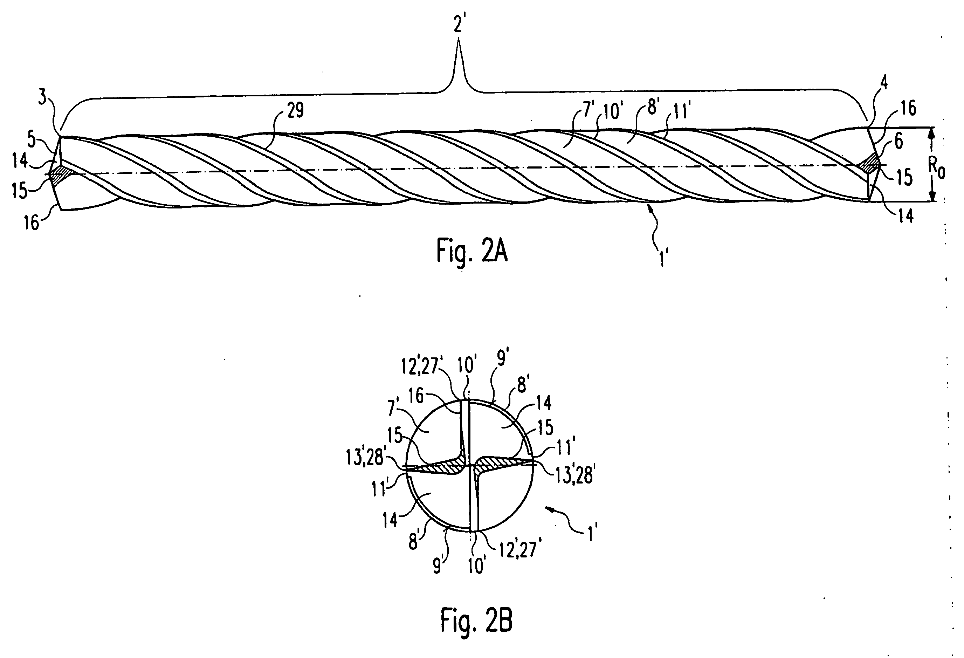

Die zweite Ausführungsform des beispielhaften Bohrwerkzeugs 1' wird nachfolgend unter Bezugnahme auf Fig. 2A und 2B beschrieben. Hierbei, wie auch in den Beschreibungen der folgenden Ausführungsformen des erfindungsgemäßen Bohrwerkzeugs, werden für identische Merkmale die gleichen Bezugszeichen wie in der Beschreibung der ersten Ausführungsform benutzt. Auf eine wiederholte Beschreibung dieser identischen Merkmale wird hierbei verzichtet.

In Abgrenzung zur ersten Ausführungsform des beispielhaften Bohrwerkzeugs 1 weist der Werkzeugschaft 2' der zweiten Ausführungsform spiralförmig in Achsrichtung des Bohrwerkzeugs 1' gewundene Spannuten 7' und entsprechend spiralförmig in Achsrichtung des Bohrwerkzeugs 1' gewundene Stege 8' auf, die eine Förderwendel 29 am Werkzeugschaft 2' zum spiralförmigen Abtransport der Späne aus der Bohrung bilden. Jeder spiralförmig gewundene Steg 8' weist folglich ebenfalls eine spiralförmig ausgeführte Nebenfreifläche 9' auf. Auch die erste Führungsfase 10' und die zweite Führungsfase 11' auf jeder der Nebenfreiflächen 9', die ersten Übergänge 27' zwischen den Spannuten 7' und den dazwischenliegenden Stegen 8', die daran ausgeführten scharfkantigen ersten Nebenschneiden 12' sowie die zweiten Übergänge 28' und die daran ausgeführten zweiten Nebenschneiden 13' sind spiralförmig gewunden.

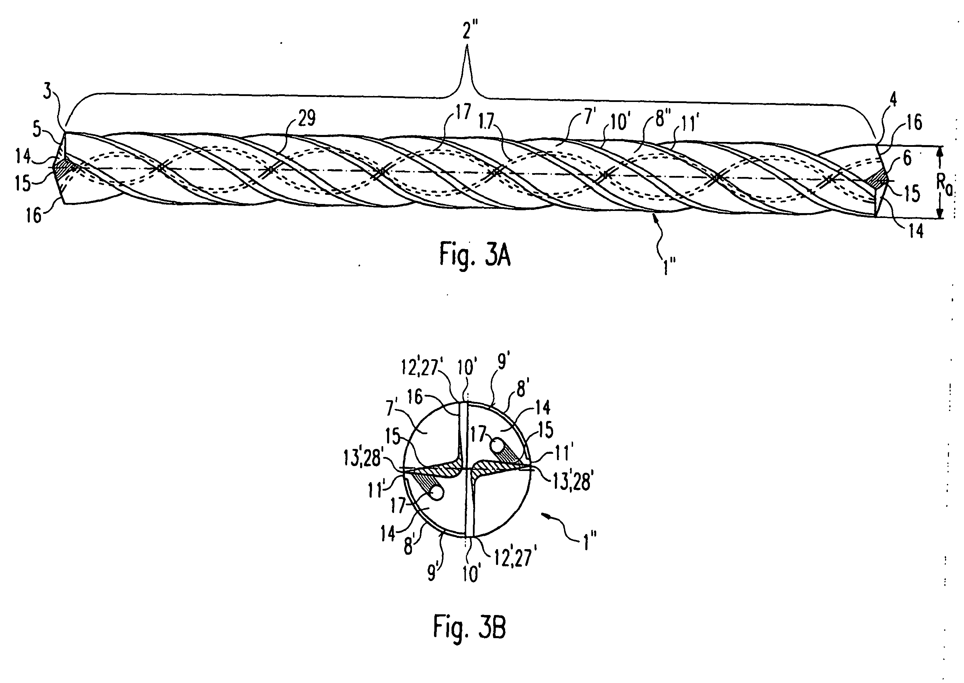

Die dritte Ausführungsform des beispielhaften Bohrwerkzeugs 1" wird nachfolgend unter Bezugnahme auf Fig. 3A und 3B beschrieben.

In Abgrenzung zur zweiten Ausführungsform des beispielhaften Bohrwerkzeugs 1' weist der Werkzeugschaft 2'' der dritten Ausführungsform des beispielhaften Bohrwerkzeugs 1'' in jedem der spiralförmig verlaufenden Stege 8" jeweils von der Hauptfreifläche 14 des ersten Bohrerkopfes 5 bis zur Hauptfreifläche 14 des zweiten Bohrerkopfes 6 spiralförmig verlaufende Kühlkanäle 16 auf, in denen Kühlmittel zur Kühlung des Bohrwerkzeugs 1" geführt werden.

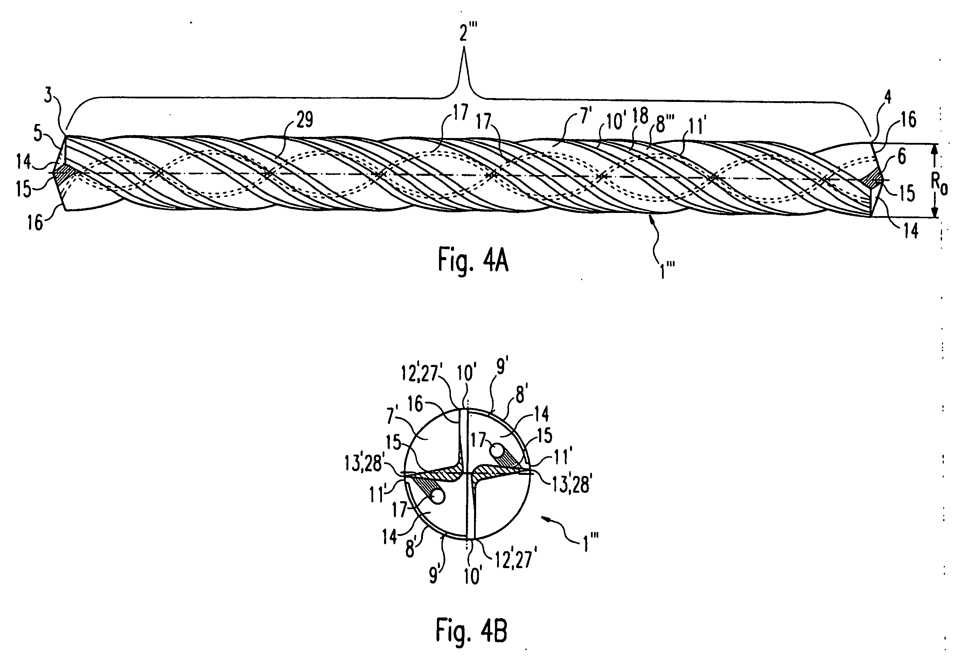

Das erfindungsgemäße Bohrwerkzeugs 1"' wird nachfolgend unter Bezugnahme auf Fig. 4A und 4B beschrieben.

In Abgrenzung zur dritten Ausführungsform des beispielhaften Bohrwerkzeugs 1'' weist der Werkzeugeschaft 2''' des erfindungsgemäßen Bohrwerkzeugs 1"' auf jeder seiner spiralförmig verlaufenden Stege 8"' jeweils eine dritte Führungsfase 18 auf, die mittig zum Steg 8"' entlang des gesamten Werkzeugschafts 2"' mit konstanter Breite und gleichem Außendurchmesser wie die erste Führungsfase 10' und die zweite Führungsfase 11' geführt ist.

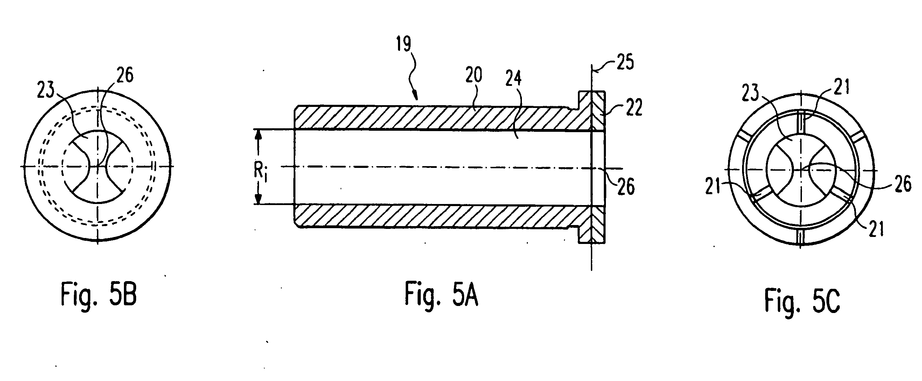

Ein Ausführungsbeispiel einer bei der Erfindung verwendbaren Spannhülse 19 wird nachfolgend unter Bezugnahme auf Fig. 5A, 5B und 5C beschrieben.

Die Spannhülse 19 weist gemäß der Querschnittdarstellung in Fig. 5A einen hohlzylindrischen Teilkörper 20 mit einem Innenraum 24 auf, dessen Innendurchmesser Rᵢ dem Außendurchmesser Rₐ des Werkzeugschaftes 2, 2', 2 " und 2''' des erfindungsgemäßen Bohrwerkzeugs entspricht. In den hohlzylindrischen Teilkörper 20 der Spannhülse 19 sind mehrere, bevorzugt in äquidistanten Winkelabschnitten verteilte, in axialer Richtung ausgerichtete schlitzförmige Ausnehmungen 21 gemäß der Seitenansicht in Fig. 5C vorgesehen. Diese ermöglichen bei Beaufschlagung der Spannhülse 20 mit Hydraulik eine radiale Kontraktion der Spannhülse 19 in Richtung eines Innenraums 24 mit Innendurchmesser Rᵢ.

Der hohlzylindrische Teilkörper 20 ist an einer seiner Grundflächen 25 mit einer runden Abschlußplatte 22 beispielsweise durch eine Schweiß- oder Löt-Verbindung abgeschlossen. Die runde Abschlußplatte 22 weist in ihrem Mittelpunkt 26 eine Durchgangsbohrung 23 auf, deren Profil dem Querschnittsprofil der jeweiligen Ausführungsform des erfindungsgemäßen Bohrwerkzeugs entspricht. Auf diese Weise kann ein erfindungsgemäßes Bohrwerkzeug durch die Durchgangsbohrung 23 der runden Abschlußplatte 22 geführt werden und damit in jede beliebige axiale Position innerhalb der Spannhülse 19 verschoben werden.

Die Ausführungsformen des erfindungsgemäßen Bohrwerkzeugs, die jeweils keinen Spannschaft aufweisen, können in Verbindung mit der Spannhülse 19 die obengenannten Aufgaben, die an eine Baugruppe bestehend aus einem Bohrwerkzeug und einer Spannvorrichtung gestellt werden, wie im folgenden ausgeführt, erfüllen:

Eine exakte Zentrierung des erfindungsgemäßen Bohrwerkzeugs innerhalb der Spannhülse 19 der Spannvorrichtung wird bewerkstelligt, indem das erfindungsgemäße Bohrwerkzeug mit seinen ersten, zweiten, dritten und weiteren Führungsfasen 10, 10', 11, 11' und 18 im gesamten Innenraum 24 des hohlzylindrischen Teilkörpers 20 der Spannhülse 19 exakt ohne zusätzliches Spiel geführt ist. Eine translatorische Verschiebe- und/oder rotatorische Kippmöglichkeit des erfindungsgemäßen Bohrwerkzeugs in radialer Richtung innerhalb der Spannhülse 19 der Spannvorrichtung ist somit ausgeschlossen, womit die exakte Zentrierung des erfindungsgemäßen Bohrwerkzeugs innerhalb der Spannhülse 19 der Spannvorrichtung gewährleistet ist. Die Spannkraft, die durch z. B. hydraulische Beaufschlagung der Spannhülse 19 der Spannvorrichtung von dieser in radialer Richtung auf den Werkzeugschaft einwirkt, bewirkt eine kraftschlüssige tangentiale Fixierung des erfindungsgemäßen Bohrwerkzeugs in die Spannhülse 19 der Spannvorrichtung.

Eine beliebige Einstellung der Auskraglänge des erfindungsgemäßen Bohrwerkzeugs relativ zur Spannhülse 19 der Spannvorrichtung ist durch die axiale Verschiebemöglichkeit des erfindungsgemäßen Bohrwerkzeugs relativ zur Spannhülse 19 der Spannvorrichtung durch Vorsehung der Durchgangsbohrung 23 in der runden Abschlußplatte 22 der Spannhülse 19 gegeben.

Die beiden Führungsfasen 10, 10' bzw. 11, 11' müssen sich nicht notwendigerweise über den gesamten Werkzeugschaft, d. h. über die gesamte axiale Länge des Bohrwerkzeugs erstrecken. Beispielsweise ist es im Rahmen der Erfindung möglich, das Bohrwerkzeug als Stufenbohrer auszubilden, bei welchem der Werkzeugschaft mehrere Stufen mit unterschiedlichem Durchmesser hat. Dabei kann es genügen, die Führungsfasen nur an einer oder nur an einzelnen Stufen des Stufenbohrers auszubilden, da der Werkzeugschaft beispielsweise nur an der Stufe mit kleinstem Durchmesser geführt werden muß. Außerdem ist es denkbar, den Werkzeugschaft nur mit einer einzigen Spannut zu versehen.

## Patentansprüche

1. Bohrwerkzeug (1,; 1'; 1"; 1"') mit einem Werkzeugschaft (2; 2'; 2"; 2"'), der mindestens eine Spannut (7; 7') aufweist,
und mit einem ersten Bohrerkopf (5), der an einem ersten. Ende (3) des Bohrwerkzeugs (1,; 1'; 1"; 1"') vorgesehen ist,
wobei sich der Werkzeugschaft (2; 2'; 2"; 2''') vom ersten Bohrerkopf (5) bis zu einem zweiten Bohrerkopf (6) erstreckt, der an einem zweiten Ende (4) des Bohrwerkzeugs (1; 1'; 1"; 1"') vorgesehen ist, und
wobei der Werkzeugschaft (2; 2', 2", 2"') zwischen den Spannuten (7; 7') befindliche Stege (8; 8'; 8"; 8''') aufweist,
**dadurch gekennzeichnet,**
**dass** an einem ersten Übergang (27; 27') zwischen jeder Spannut (7; 7') und einem der angrenzenden Stege (8; 8'; 8"; 8"') jeweils eine erste Nebenschneide (12; 12') und auf einer Nebenfreifläche (9; 9') jedes Steges (8; 8'; 8"; 8"') entlang der ersten Nebenschneide (12; 12') jeweils eine erste Führungsfase (10; 10') vorhanden ist, und
**dass** jeder Steg (8; 8'; 8"; 8"') des Werkzeugschafts (2; 2'; 2"; 2"') mindestens eine zweite Führungsfase (11; 11') aufweist, die parallel zur ersten Führungsfase (10; 10') verläuft und den gleichen Außendurchmesser (R8) wie die erste Führungsfase (10; 10') besitzt, und dass jeder Steg (8: 8'; 8"; 8"') der spiralförmigen Förderwendel eine dritte Führungsphase (18) aufweist, die mittig zum Steg (8; 8'; 8"; 8"') parallel zur ersten Führungsfase (10; 10') und zweiten Führungsfase (11; 11') verläuft und einen gleichen Außendurchmesser (Ra) wie die erste Führungsfase (10; 10') und zweite Führungsfase (11; 11') besitzt.

2. Bohrwerkzeug nach Anspruch 1,
**dadurch gekennzeichnet,**
**dass** jede Spannut (7; 7') eine zweite Nebenschneide (13; 13') am einem zweiten Übergang (28; 28') zwischen der jeweiligen Spannut (12; 12') und dem jeweils anderen der beiden angrenzenden Stege (8; 8'; 8"; 8"') aufweist, und dass die Nebenfreifläche (9; 9') jedes Steges (8; 8'; 8"; 8"') die zweite Führungsfase (11; 11') entlang der zweiten Nebenschneide (13; 13') aufweist.

3. Bohrwerkzeug nach Anspruch 1 oder 2,
**dadurch gekennzeichnet,**
das die Spannuten (12; 12') einen spiralförmigen Verlauf besitzen und mit den zwischen den spiralförmig verlaufenden Spannuten (12; 12') befindlichen Stegen (8; 8'; 8"; 8"') eine spiralförmige Förderwendel (29) bilden.

4. Bohrwerkzeug nach einem der Ansprüche 1 bis 3,
**dadurch gekennzeichnet,**
**dass** in den Stegen (8; 8'; 8"; 8"') des Bohrwerkzeugs (1,; 1'; 1"; 1"') jeweils ein Kühlkanal (17) geführt ist.

5. Bohrwerkzeug nach einem der Ansprüche 1 bis 4,
**dadurch gekennzeichnet,**
**dass** das Bohrwerkzeug aus Hartmetall, insbesondere aus einer gesinterten Mischung aus Wolframcarbit und Cobalt besteht.

6. Bohrwerkzeug nach einem der Ansprüche 1 bis 5,
**dadurch gekennzeichnet,**
**dass** das Bohrwerkzeug als Stufenbohrer ausgebildet ist.

## Claims

1. Drilling tool (1; 1'; 1"; 1"') having a tool shank (2; 2'; 2"; 2"') which has at least one clamping groove (7; 7');
and having a first drill head (5) which is provided at a first end (3) of the drilling tool (1; 1'; 1"; 1"'); wherein the tool shank (2; 2'; 2"; 2"') extends from the first drill head (5) as far as a second drill head (6) which is provided at a second end (4) of said drilling tool (1; 1'; 1"; 1"'); and
wherein the tool shank (2; 2'; 2"; 2"') has webs (8; 8'; 8"; 8"') which are located between the clamping grooves (7; 7');
**characterised in that**
a first minor cutting edge (12; 12') is present, in each case, at a first transition (27; 27') between each clamping groove (7; 7') and one of the adjoining webs (8; 8'; 8"; 8"'), and a first guide chamfer (10; 10') is present, in each case, on a minor flank (9; 9') of each web (8; 8'; 8"; 8" ') along said first minor cutting edge (12; 12');
and that each web (8; 8'; 8"; 8"') of the tool shank (2; 2'; 2"; 2"') has at least one second guide chamfer (11; 11') which extends parallel to the first guide chamfer (10; 10') and possesses the same external diameter (R8) as the first guide chamfer (10; 10'); and that each web (8; 8'; 8"; 8"') of the helical conveying spiral has a third guide chamfer (18) which extends centrally in relation to the web (8; 8'; 8"; 8"') and parallel to the first guide chamfer (10; 10') and second guide chamfer (11; 11') and possesses the same external diameter (Ra) as the first guide chamfer (10; 10') and second guide chamfer (11; 11').

2. Drilling tool according to claim 1,
**characterised in that**
each clamping groove (7; 7') has a second minor cutting edge (13; 13') at a second transition (28; 28') between the relevant clamping groove (12; 12') and the other of the two adjoining webs (8; 8'; 8"; 8"') in each case;
and that the minor flank (9; 9') of each web (8; 8'; 8"; 8"') has the second guide chamfer (11; 11') along the second minor cutting edge (13; 13').

3. Drilling tool according to claim 1 or 2,
**characterised in that**
the clamping grooves (12; 12') possess a helical course and form, with the webs (8; 8'; 8"; 8"') located between the helically extending clamping grooves (12; 12'), a helical conveying spiral (29).

4. Drilling tool according to one of claims 1 to 3,
**characterised in that**
a cooling channel (17) is routed in each of the webs (8; 8'; 8"; 8"') of the drilling tool (1; 1'; 1"; 1" ').

5. Drilling tool according to one of claims 1 to 4,
**characterised in that**
said drilling tool consists of hard metal, in particular of a sintered mixture of tungsten carbide and cobalt.

6. Drilling tool according to one of claims 1 to 5,
**characterised in that**
said drilling tool is constructed as a stepped drill.

## Revendications

1. Outil de perçage (1, ; 1'; 1"; 1"') avec une tige d'outil (2 ; 2' ; 2"; 2"') qui présente au moins une rainure de serrage (7 ; 7'),
et avec une première tête de foret (5) qui est prévue au niveau d'une première extrémité (3) de l'outil de perçage (1, ; 1' ; 1" ; 1"'),
la tige d'outil (2 ; 2' ; 2" ; 2"') s'étendant de la première tête de foret (5) jusqu'à une seconde tête de foret (6) qui est prévue au niveau d'une seconde extrémité (4) de l'outil de perçage (1 ; 1' ; 1"; 1"'), et
la tige d'outil (2 ; 2' ; 2"; 2"') présentant des traverses (8 ; 8' ; 8"; 8"') se trouvant entre les rainures de serrage (7 ; 7'),
**caractérisé en ce**
**que** sur un premier passage (27; 27') entre chaque rainure de serrage (7; 7') et l'une des traverses (8 ; 8' ; 8''; 8"') contiguës sont présents respectivement une première coupe secondaire (12 ; 12') et sur une face de dépouille secondaire (9 ; 9') de chaque traverse (8 ; 8' ; 8" ; 8"') le long de la première coupe secondaire (12; 12'), respectivement un premier chanfrein (10 ; 10'), et
en ce que chaque traverse (8 ; 8' ; 8", 8''') de la tige d'outil (2 ; 2' ; 2"; 2''') présente au moins un deuxième chanfrein (11 ; 11') qui s'étend parallèlement au premier chanfrein (10 ; 10') et possède le même diamètre extérieur (R8) que le premier chanfrein (10 ; 10'), et en ce que chaque traverse (8 ; 8' ; 8" ; 8''') de la spirale de transport présente un troisième chanfrein (18) qui s'étend au milieu de la traverse (8 ; 8' ; 8"; 8"') parallèlement au premier chanfrein (10 ; 10') et au second chanfrein (11 ; 11') et possède un même diamètre extérieur (Ra) que le premier chanfrein (10 ; 10') et le second chanfrein (11 ; 11').

2. Outil de perçage selon la revendication 1,
**caractérisé en ce**
**que** chaque rainure de serrage (7 ; 7') présente une seconde coupe secondaire (13, 13') sur un second passage (28 ; 28') entre la rainure de serrage respective (12 ; 12') et l'autre des deux traverses contiguës (8 ; 8' ; 8" ; 8"'), et en ce que la face de dépouille secondaire (9 ; 9') de chaque traverse (8 ; 8' ; 8"; 8''') présente le second chanfrein (11 ; 11') le long de la seconde coupe secondaire (13 ; 13').

3. Outil de perçage selon la revendication 1 ou 2,
**caractérisé en ce**
**que** les rainures de serrage (12 ; 12') possèdent un tracé spiralé et forment une spirale de transport (29) avec les traverses (8 ; 8' ; 8" ; 8"') se trouvant entre les rainures de serrage (12 ; 12') s'étendant en spirale.

4. Outil de perçage selon l'une quelconque des revendications 1 à 3,
**caractérisé en ce**
**que** dans chaque traverse (8 ; 8' ; 8''; 8"') de l'outil de perçage (1; 1'; 1"; 1''') est guidé un canal de refroidissement (17).

5. Outil de perçage selon l'une quelconque des revendications 1 à 4,
**caractérisé en ce**
**que** l'outil de perçage est fabriqué en métal dur, en particulier en un mélange fritté de carbure de tungstène et de cobalt.

6. Outil de perçage selon l'une quelconque des revendications 1 à 5,
**caractérisé en ce**
**que** l'outil de perçage est conçu comme un foret étagé.
